# EUROPEAN PATENT APPLICATION

(11) **EP 2 993 592 A1**
(43) Date of publication of application: **09.03.2016**
(21) Application number: 14200737.6
(22) Date of filing: 31.12.2014
(51) Int. Cl.: G06F 17/30

(54) **Searching method and system and network robots**

(30) Priority: 04.09.2014 CN 201410449680
(71) Applicant: Baidu Online Network Technology (Beijing) Co., Ltd, Beijing 100085 (CN)
(72) Inventor: Jing, Kun, Haidian District (CN); Xu, Ran, Haidian District (CN); Wang, Haifeng, Haidian District (CN); Hu, Qu, Haidian District (CN); Li, Zhuoya, Haidian District (CN); Rong, Rong, Haidian District (CN); Sun, Yunfeng, Haidian District (CN); Huang, Jizhou, Haidian District (CN)
(74) Representative: Potter Clarkson LLP

(57) **Abstract**

The present invention proposes a searching method and system and a network robot. The method comprises: S1: a network robot acquiring a search term from a user; S2: the network robot generating guidance information for the user according to the search term; S3: the network robot receiving response information from the user regarding the guidance information; and S4: the network robot feeding back the response information to a search engine, such that the search engine updates search results. The searching method of the embodiments of the present invention can not only help and guide a user to obtain more accurate search results and better satisfy the search needs of the user, but can also provide personalized services for the user and increase interest when the user uses a search engine to carry out a search, thus improving the user experience.

## Description

### Technical field

The present invention relates to the technical field of search engines, and in particular to a searching method and system and a network robot.

### Background art

With the rapid development of informatization, the frequency with which a user carries out information queries by means of a search engine is increasingly high. Currently, a user inputs a search term requiring querying in a search bar provided by a search engine, and the search engine finds matches for the search term and then displays search results to the user.

However, the process whereby a user uses a search engine to carry out searching is relatively cumbersome. After the user checks search results displayed by the search engine, if the user is not satisfied with the search results, the user needs to conceive of a new search term based on the search results and carry out searching again by means of the search engine. If the search results obtained after searching again still cannot satisfy the needs of the user, then the user still needs to conceive of a new search term again to perform searching. In other words, the search results provided by the search engine for the user are narrated factually and unimaginatively, and whether the search results are good or bad cannot be anticipated. For example, when the user searches for "Beijing weather", the search engine directly returns structured search results about Beijing weather, which the user needs to understand by himself/herself. However, many users actually care more about changes in Beijing weather (for example, the weather will cool down suddenly so more clothes need to be worn, the weather will suddenly be rainy so an umbrella needs to be taken, etc.), and the search engine cannot solve knowledge problems in structured data of the search results. Therefore, the search results provided by the search engine cannot usually satisfy the needs of the user, and the user experience is not good.

### Contents of the invention

The present invention is intended to solve one of the technical problems in the related art at least to some extent.

For this purpose, a first object of the present invention is to propose a searching method. The method can not only help and guide a user to obtain more accurate search results and better satisfy the search needs of the user, but can also provide personalized services for the user and increase interest when the user uses a search engine to carry out a search, thus improving the user experience.

A second object of the present invention is to propose a searching system.

A third object of the present invention is to propose a network robot.

In order to achieve the objects mentioned above, a first aspect embodiment of the present invention proposes a searching method, comprising the steps of: S1: a network robot acquiring a search term from a user; S2: the network robot generating guidance information for the user according to the search term; S3: the network robot receiving response information from the user regarding the guidance information; and S4: the network robot feeding back the response information to a search engine, such that the search engine updates search results.

A network robot generates guidance information according to a search term, and guides a user to input response information by means of interaction with the user, such that a search engine ranks search results according to the response information; therefore, the searching method of the embodiments of the present invention can not only help and guide a user to obtain more accurate search results and better satisfy the search needs of the user, but can also provide personalized services for the user and increase interest when the user uses a search engine to carry out a search, thus improving the user experience.

In order to achieve the objects mentioned above, a second aspect embodiment of the present invention proposes a searching system, comprising: a network robot and a search engine, wherein the network robot is used for acquiring a search term from a user, generating guidance information for the user according to the search term, receiving response information from the user regarding the guidance information, and feeding back the response information to a search engine; and the search engine is used for receiving the response information fed back by the network robot, and updating search results according to the response information.

A network robot generates guidance information according to a search term, and guides a user to input response information by means of interaction with the user, such that a search engine ranks search results according to the response information; therefore, the searching system of the embodiments of the present invention can not only help and guide a user to obtain more accurate search results and better satisfy the search needs of the user, but can also provide personalized services for the user and increase interest when the user uses a search engine to carry out a search, thus improving the user experience.

In order to achieve the objects mentioned above, a third aspect embodiment of the present invention proposes a network robot, comprising: an acquisition module for acquiring a search term from a user; a generation module for generating guidance information for the user according to the search term; a first receiving module for receiving response information from the user regarding the guidance information; and a feedback module for feeding back the response information to a search engine, such that the search engine updates search results.

A network robot generates guidance information according to a search term, and guides a user to input response information by means of interaction with the user, such that a search engine ranks search results according to the response information; therefore, the network robot of the embodiments of the present invention can not only help and guide a user to obtain more accurate search results and better satisfy the search needs of the user, but can also provide personalized services for the user and increase interest when the user uses a search engine to carry out a search, thus improving the user experience.

The additional aspects and advantages of the present invention will be provided in part in the description below, and will be apparent in part from the description below, or understood by means putting the present invention into practice.

### Description of the accompanying drawings

The above-mentioned and/or additional aspects and advantages of the present invention will become apparent and be easily understood from the description of the embodiments below in combination with the accompanying drawings.
Fig. 1 is a flowchart of a searching method of one embodiment of the present invention;
Figs. 2(a)-(k) are schematic diagrams of a network robot of one embodiment of the present invention;
Fig. 3 is a flowchart of a searching method of one specific embodiment of the present invention;
Fig. 4 is a schematic structural diagram of a searching system of one embodiment of the present invention;
Fig. 5 is a schematic structural diagram of a network robot of one embodiment of the present invention; and
Fig. 6 is a schematic structural diagram of a network robot of one specific embodiment of the present invention.

### Detailed description of embodiments

The embodiments of the present invention will be described in detail below, and examples of the embodiments are shown in the accompanying drawings, in which the same or similar reference numerals represent the same or similar modules or modules having the same or similar functions throughout. The embodiments described below by referring to the accompanying drawings are exemplary and are intended to explain the present invention, rather than being understood as limitations to the present invention.

In addition, the terms "first" and "second" are merely for descriptive purposes, rather than being understood to indicate or imply relative importance or implicitly specify the number of technical features indicated. Thus, a feature defined by "first" and "second" may explicitly or implicitly comprise one or more of the feature. In the description of the present invention, the meaning of "a plurality of" is two or more than two, unless clearly and specifically defined otherwise.

Any process or method description in the flowcharts or otherwise described herein may be understood to represent a module, segment or section comprising one or more codes of executable instructions used for implementing a particular logical function or process step, and the scope of the preferred embodiments of the present invention comprises further implementations, where functions may be carried out not according to the order shown or discussed, including according to a basically synchronous manner or an inverse order in accordance with involved functions, and this should be understood by those skilled in the art to which the embodiments of the present invention belong.

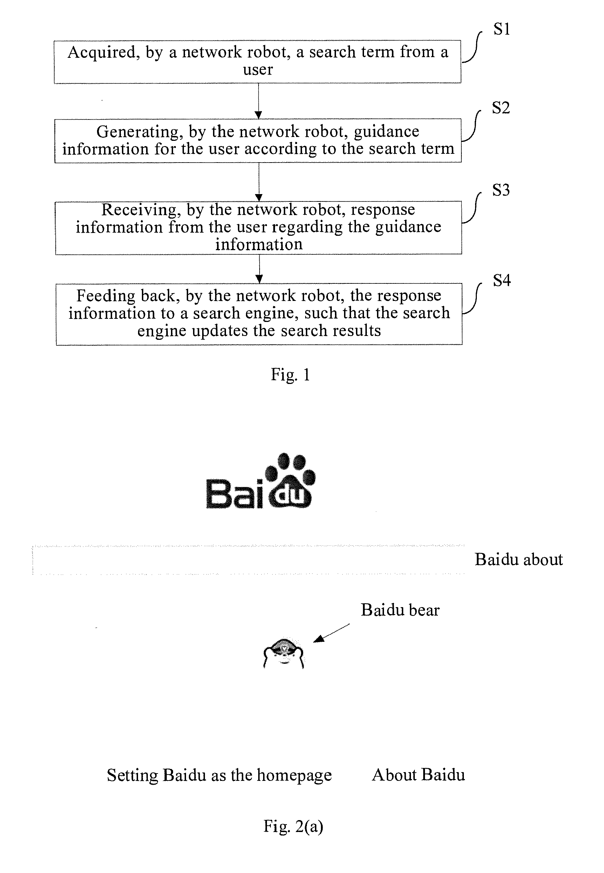

Currently, a user usually needs to conceive of a new search term based on search results when using a search engine to carry out searching, and the search engine cannot anticipate whether the search results are good or bad; therefore, the user is actually relatively toilsome in the search process. If the search engine can predict efficient search results based on big data, or actively guide the user step by step to more efficiently find the best search result, many troubles when user is searching may be omitted, such that the search results provided by the search engine can better satisfy the needs of the user. For this purpose, the present invention proposes a searching method. Fig. 1 is a flowchart of a searching method of one embodiment of the present invention.

As shown in Fig. 1, the searching method comprises:
S1, a network robot acquires a search term from a user.

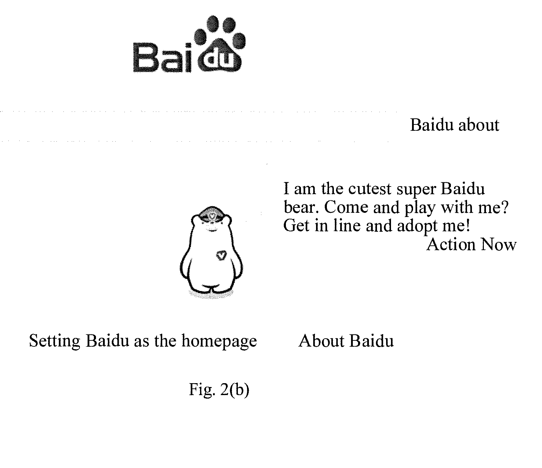

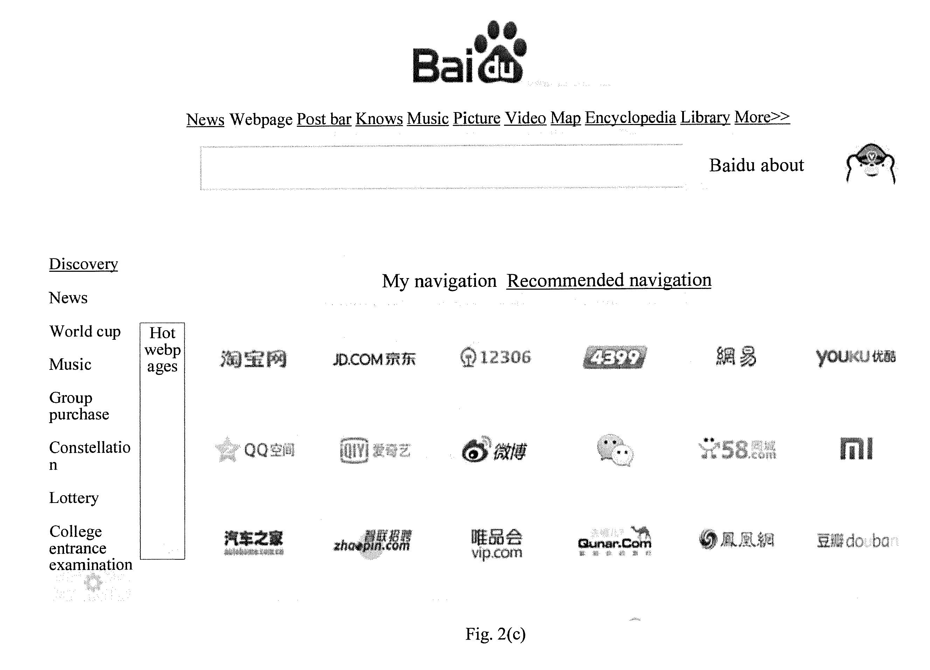

The network robot is an intelligent robot independent of a search engine, and a user may install same on a mobile terminal or a wearable device according to his own needs. When the user does not install the network robot, search results acquired by the user by means of the search engine are passive, and they need to spend time and effort thinking to obtain a more appropriate search term. After the user has installed the network robot, the network robot may help or guide the user to obtain the most appropriate search result. For example, as shown in Fig. 2(a), the network robot is a "Baidu bear", and an installation interface of the "Baidu bear" may be set up on a search interface provided by the search engine. As shown in Fig. 2(b), when the user accesses the search interface, he/she may choose to install the "Baidu bear" by clicking an icon of the "Baidu bear". As shown in Fig. 2(c), after the user has installed the "Baidu bear", the "Baidu bear" may be displayed on the edge of a search bar in the search interface as an additional function, just like a Baidu expert sitting beside the user, guiding the user on how to obtain the best search result step by step.

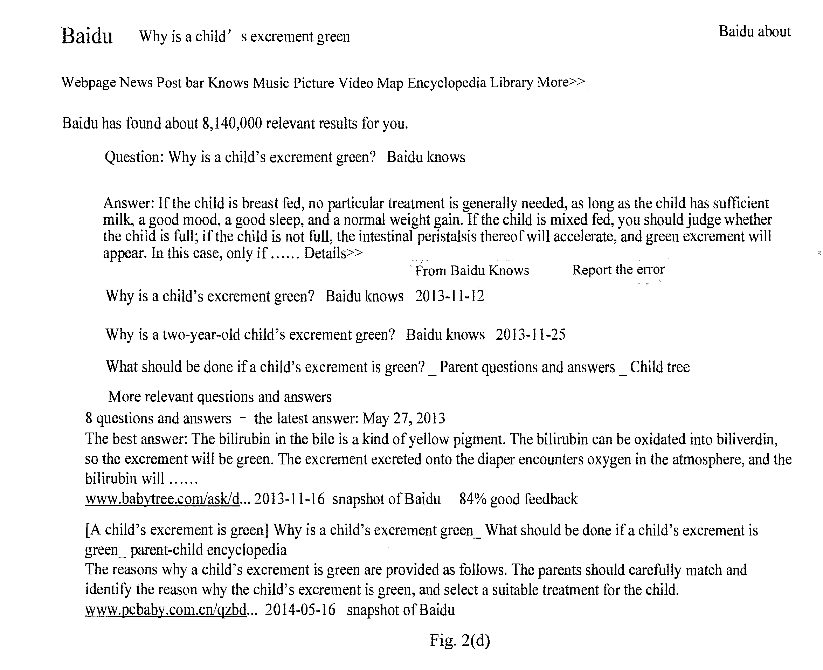

Specifically, the user may choose to start the network robot or choose to close the network robot according to his own needs. When the user chooses to start the network robot, if the user inputs a search term in the search bar provided by the search engine, then the search engine acquires a plurality of corresponding search results according to the search term, and displays the search results in a search result interface. Meanwhile, the network robot acquires the search term input by the user. For example, as shown in Fig. 2(d), the user inputs "Why is a child's excrement green" in the search bar as the search term, and the "Baidu bear" acquires the search term.

S2, the network robot generates guidance information for the user according to the search term.

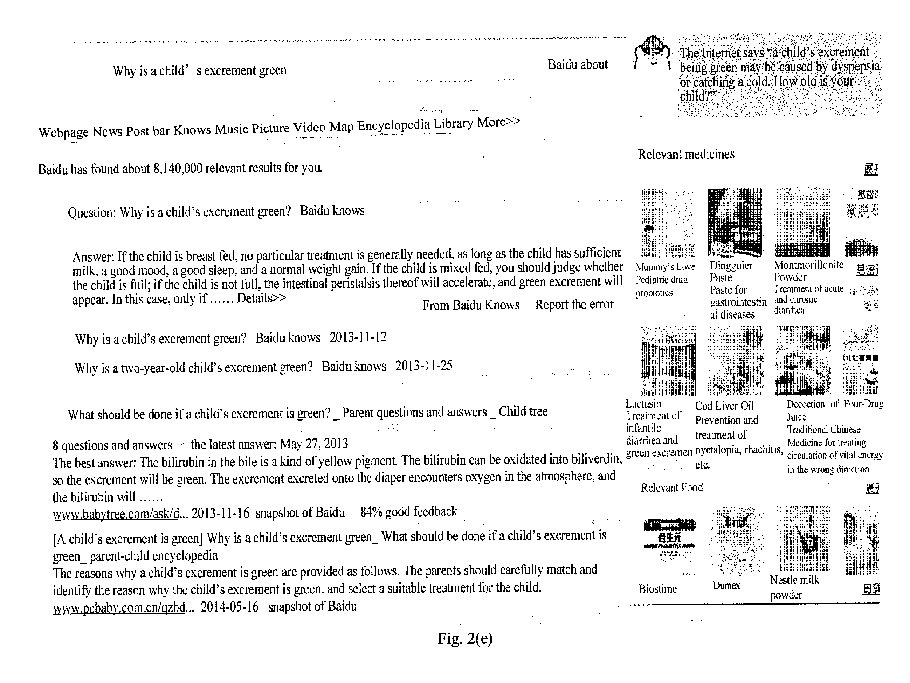

For example, as shown in Fig. 2(e), the "Baidu bear" may generate the corresponding guidance information the Internet says "a child's excrement being green may be caused by dyspepsia or catching a cold. How old is your baby?" to display to the user regarding the search term "Why is a child's excrement green", thereby guiding the user to input corresponding response information regarding the guidance information.

S3, the network robot receives response information from the user regarding the guidance information.

For example, the user may input response information "5 years old" regarding the guidance information, and the "Baidu bear" receives the corresponding information input by the user.

S4, the network robot feeds back the response information to a search engine, such that the search engine updates search results.

Specifically, the network robot sends the response information to the search engine, and the search engine ranks a plurality of search results again according to the response information, and displays the search results which have been ranked again to the user for checking. For example, the "Baidu bear" sends the response information "5 years old" input by the user to the search engine, and the search engine ranks the search results again in combination with the response information "5 years old", and ranks search results which are more in tune with the user's needs at the top to display to the user.

A network robot generates guidance information according to a search term, and guides a user to input response information by means of interaction with the user, such that a search engine ranks search results according to the response information; therefore, the searching method of the embodiments of the present invention can not only help and guide a user to obtain more accurate search results and better satisfy the search needs of the user, but can also provide personalized services for the user and increase interest when the user uses a search engine to carry out a search, thus improving the user experience.

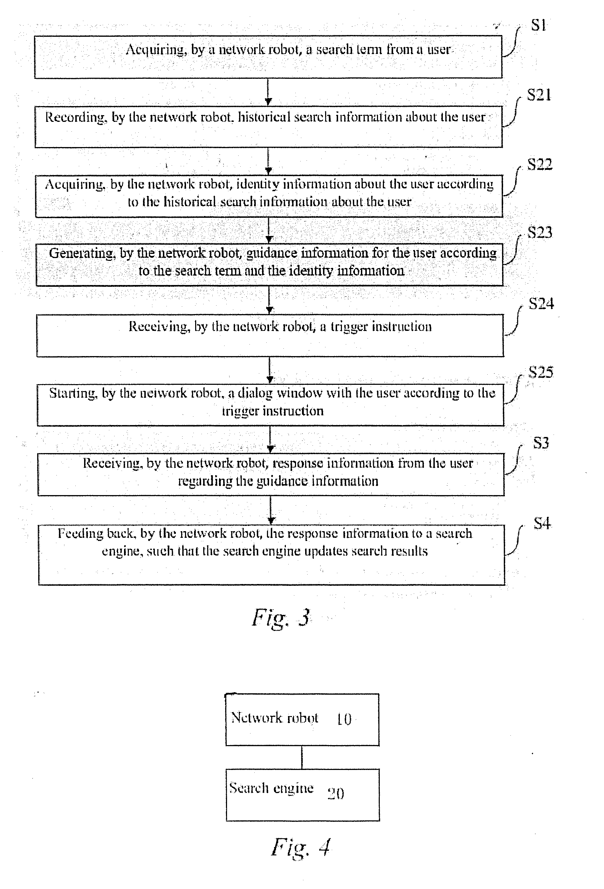

Fig. 3 is a flowchart of a searching method of one specific embodiment of the present invention.

As shown in Fig. 3, the searching method comprises:
S1, a network robot acquires a search term from a user.

The network robot is an intelligent robot independent of a search engine, and a user may install same on a mobile terminal or a wearable device according to his own needs. When the user does not install the network robot, search results obtained by the user by means of the search engine are passive, and they need to spend time and effort thinking to obtain a more appropriate search term. After the user has installed the network robot, the network robot may help or guide the user to obtain the most appropriate search result. For example, as shown in Figs. 2(a) and (b), the network robot is a "Baidu bear", and an installation interface of the "Baidu bear" may be set up on a search interface provided by the search engine; and when the user accesses the search interface, he/she may choose to install the "Baidu bear" by clicking an icon of the "Baidu bear".

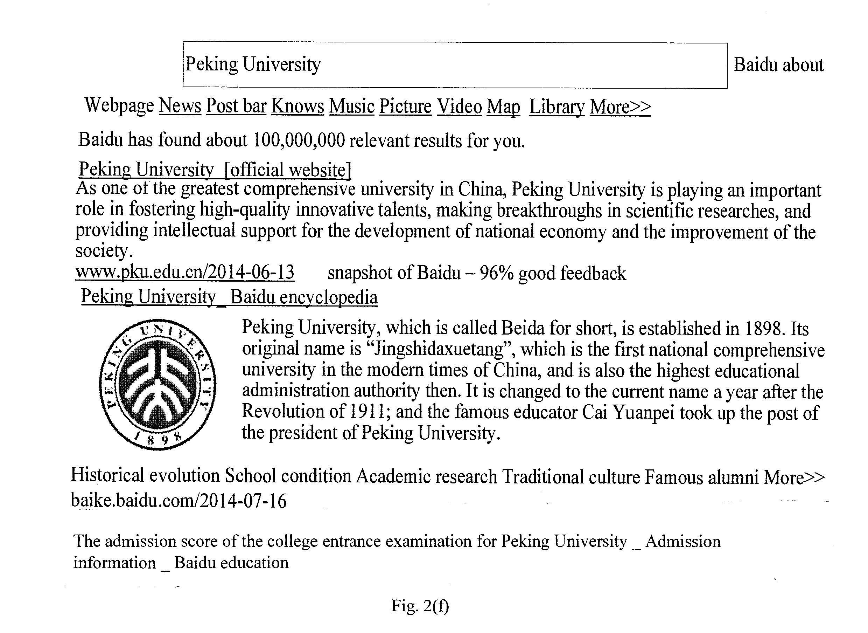

Specifically, the user may choose to start the network robot or choose to close the network robot according to his own needs. When the user chooses to start the network robot, if the user inputs a search term in the search bar provided by the search engine, then the search engine acquires a plurality of corresponding search results according to the search term, and displays the search results in a search result interface. Meanwhile, the network robot acquires the search term input by the user. For example, as shown in Fig. 2(f), the user inputs "Peking University" in the search bar as the search term, and the "Baidu bear" acquires the search term "Peking University".

S21, the network robot records historical search information about the user.

Specifically, each time the "Baidu bear" records the search term input by the user each time the user uses the search engine to carry out a search.

S22, the network robot acquires identity information about the user according to the historical search information about the user.

Specifically, after the "Baidu bear" acquires the search term "Peking University" input by the user, the "Baidu bear" analyzes search terms of historical searches of the user to acquire identity information about the user. For example, the "Baidu bear" analyzes the age of the user by means of the search terms of the user, e.g. the user is a student between 16 and 18 years old, or the user is a child between 6 and 10 years old.

In one embodiment of the present invention, the network robot collects information about the user, and establishes a model of the user according to the information about the user. Specifically, the network robot may acquire information such as age, occupation, interests and hobbies of the user according to historical browsing records of the user, and then establishes different user models regarding different types of users according to this information, such that the network robot may generate more targeted dialog content and interact with the user according to the established user model when generating guidance information.

S23, the network robot generates guidance information for the user according to the search term and the identity information.

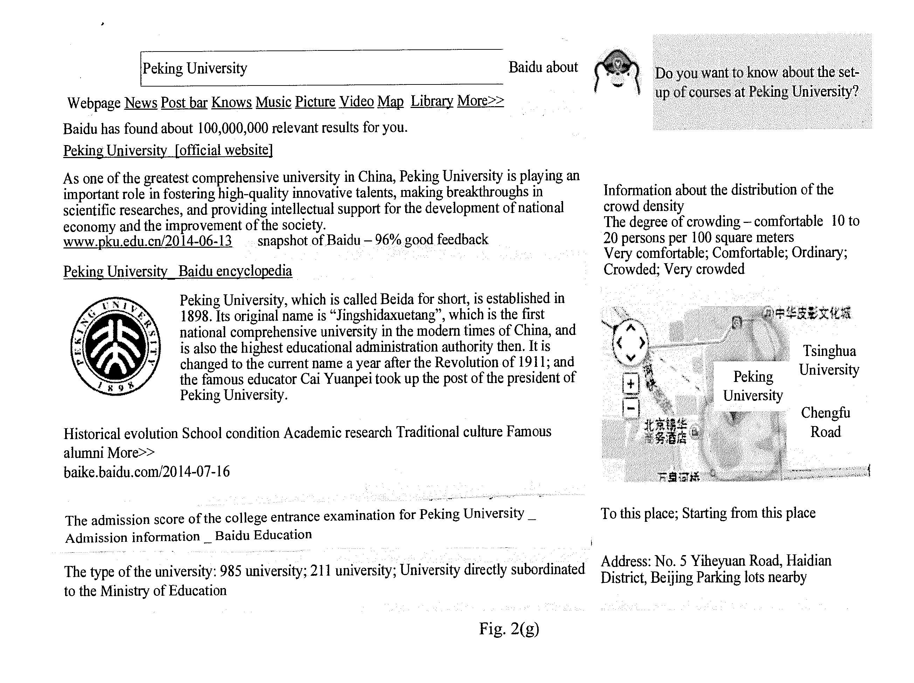

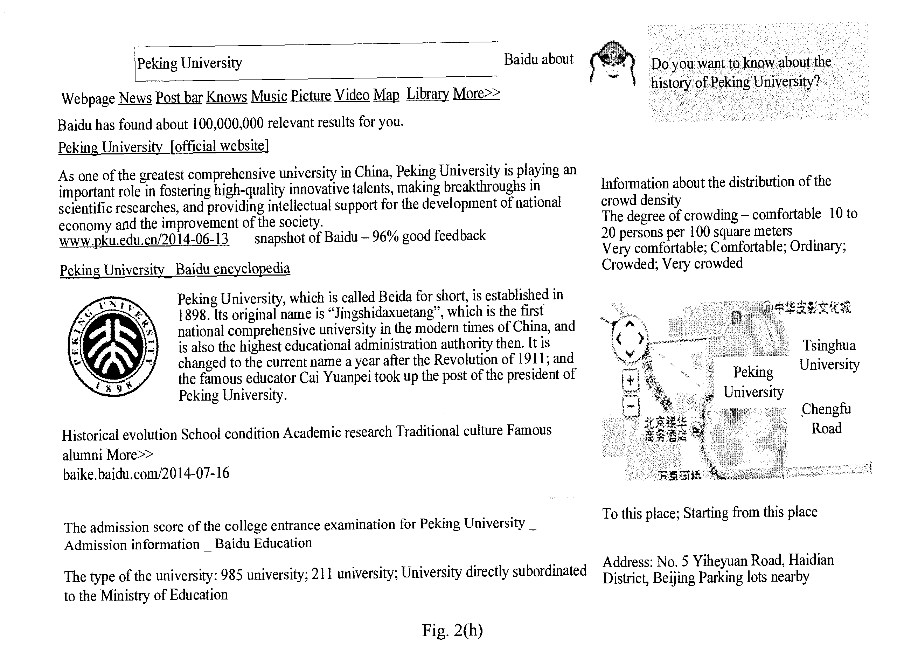

Specifically, the network robot may generate different guidance information regarding different identity information about the user. In one embodiment of the present invention, the guidance information is provided for the user in the form of questions and answers. For example, as regards the same search term "Peking University", the "Baidu bear" generates different guidance information regarding different ages of users. As shown in Fig. 2(g), if the user is a student between 16 and 18 years old, then the "Baidu bear" may generate the guidance information "Do you want to know about the set up of courses at Peking University?" to display to the user; or as shown in Fig. 2(h), if the user is a child between 6 and 10 years old, then the "Baidu bear" may generate the guidance information "Do you want to know about the history of Peking University?" to display to the user, thereby guiding the user to input corresponding response information regarding the guidance information. Thus, the network robot can gain a deeper understanding of the user by means of acquiring identity information about the user, makes the search results more in tune with user's needs, and further improves the user experience.

S24, the network robot receives a trigger instruction.

For example, the user may send a trigger instruction to the "Baidu bear" by clicking same.

S25, the network robot starts a dialog window with the user according to the trigger instruction.

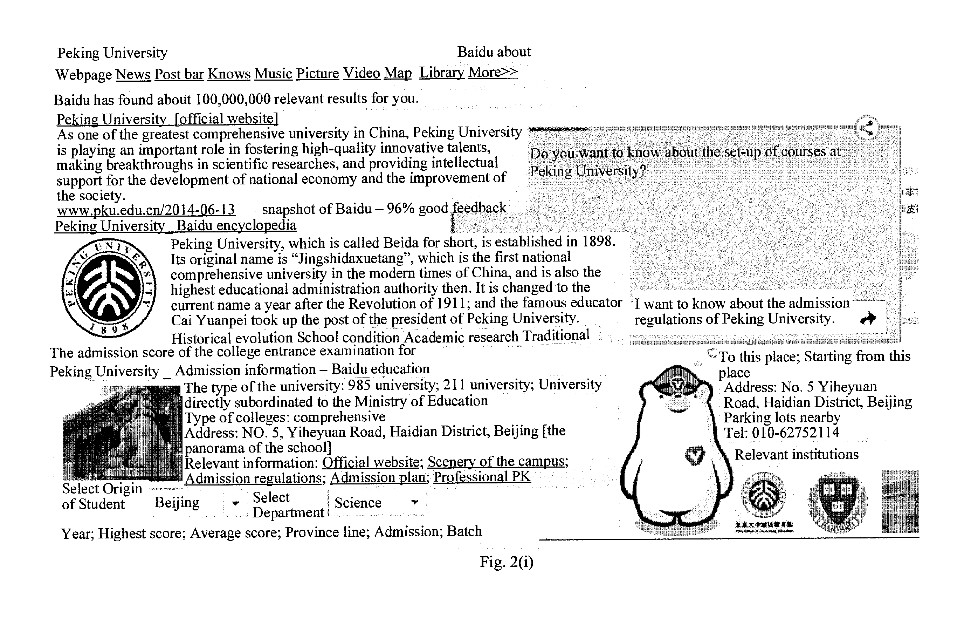

For example, as shown in Fig. 2(i), after receiving a trigger instruction of the user, the "Baidu bear" starts a dialog and interaction mode with the user, displays guidance information in a dialog window, and performs dialog and interaction with the user by means of the dialog window.

S3, the network robot receives response information from the user regarding the guidance information.

For example, as shown in Fig. 2(i), the user may input response information "I want to know about the admission regulations of Peking University" regarding the guidance information, and the "Baidu bear" receives the response information input by the user.

S4, the network robot feeds back the response information to a search engine, such that the search engine updates search results.

Specifically, the network robot sends the response information to the search engine, and the search engine ranks a plurality of search results again according to the response information, and displays the search results which have been ranked again to the user for checking. For example, the "Baidu bear" sends the response information "I want to know about the admission regulations of Peking University" input by the user to the search engine, and the search engine ranks the search results regarding the search term "Peking University" again in combination with the response information "admission regulations", and ranks search results which are more in tune with the user's needs at the top to display to the user.

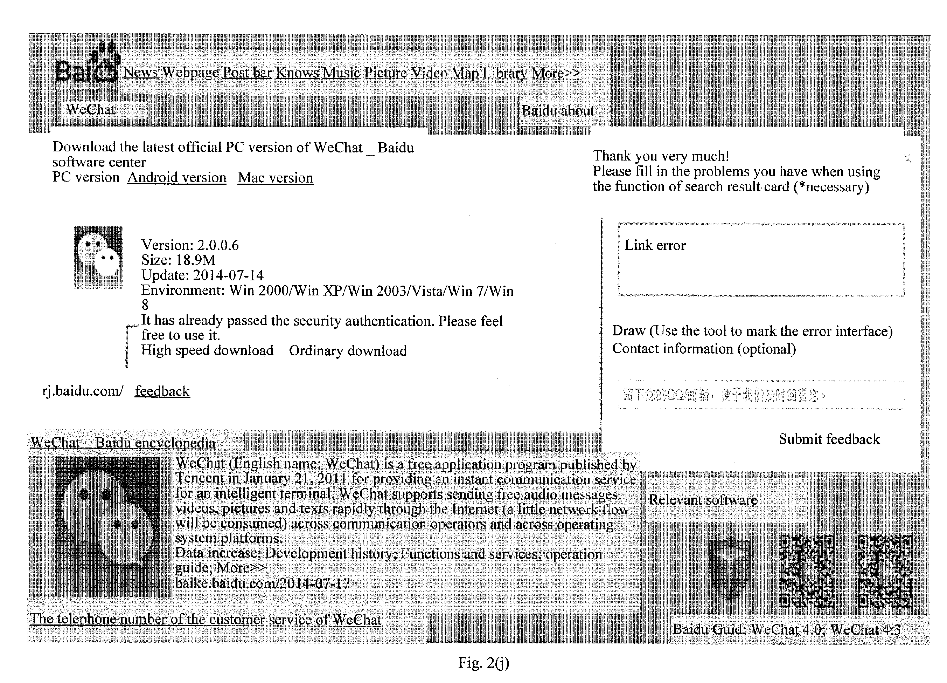

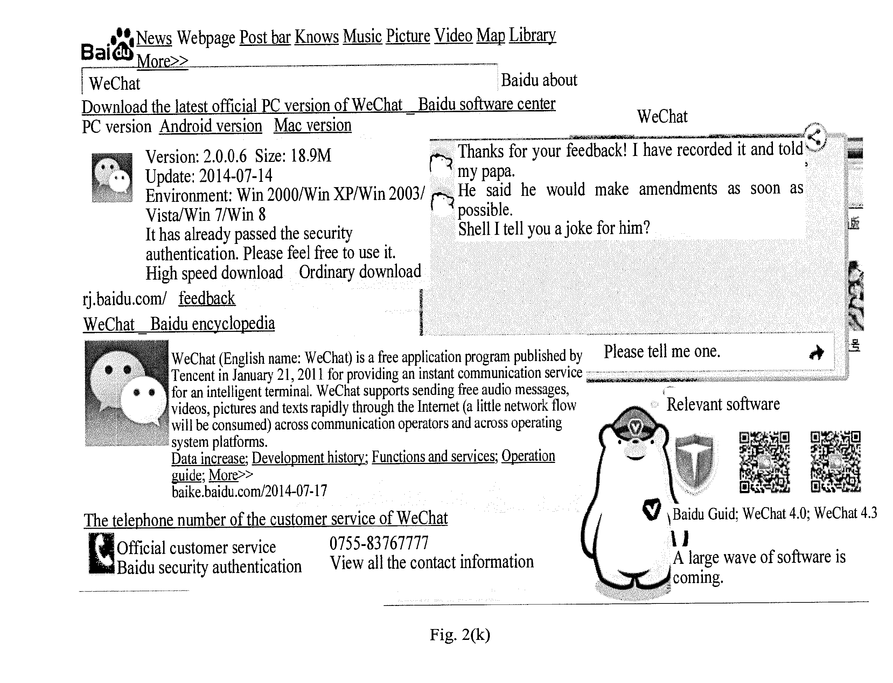

In one embodiment of the present invention, if the user is not satisfied with the search results, a feedback opinion may be submitted to the search engine. The network robot may acquire the feedback opinion, and provides emotional comfort to the user. For example, as shown in Fig. 2(j), when the user searches for "WeChat", if the user is not satisfied with "official download of the PC version of WeChat" in the search results, such as with an download error link, then the user may open an opinion feedback window by clicking an opinion feedback function, fill in the opinion feedback window with a feedback opinion "link error", and then send the feedback opinion to the search engine. At this moment, as shown in Fig. 2(k), after acquiring the feedback opinion, the "Baidu bear" may start a dialog window with the user, and performs dialog and interaction with the user by means of the dialog window. Thus, the interactivity between the user and the search engine may be further enhanced, and socialization elements are introduced, thereby improving the interest when a user is searching, and further satisfying the search needs of the user.

A network robot determines identity information about a user by means of historical search information about the user, and provides different guidance information for users with different identity information; therefore, the searching method of the embodiments of the present invention makes the network robot gain a deeper understanding of the user, and makes the ranked search results of the search engine more in tune with the user's needs. In addition, the network robot starts a dialog window with the user according to a trigger instruction, and receives response information from the user regarding the guidance information by means of the dialog window; therefore, the interactivity between the user and the search engine may be enhanced, and socialization elements are introduced, thereby improving the interest when user is searching, and further satisfying the search needs of the user.

In order to implement the embodiments above, the present invention also proposes a searching system.

Fig. 4 is a schematic structural diagram of a searching system of one embodiment of the present invention.

As shown in Fig. 4, the searching system comprises: a network robot 10 and a search engine 20.

Specifically, the network robot 10 is used for acquiring a search term from a user, generating guidance information for the user according to the search term, receiving response information from the user regarding the guidance information, and feeding back the response information to the search engine 20.

The network robot 10 is an intelligent robot independent of the search engine 20, and a user may install same on a mobile terminal or a wearable device according to his own needs. When the user does not install the network robot 10, search results acquired by the user by means of the search engine 20 are passive, and they need to spend time and effort thinking to obtain a more appropriate search term. After the user has installed the network robot 10, the network robot 10 may help or guide the user to obtain the most appropriate search result. For example, as shown in Fig. 2(a), the network robot 10 is a "Baidu bear", and an installation interface of the "Baidu bear" may be set up on a search interface provided by the search engine 20. As shown in Fig. 2(b), when the user accesses the search interface, he/she may choose to install the "Baidu bear" by clicking an icon of the "Baidu bear". As shown in Fig. 2(c), after the user has installed the "Baidu bear", the "Baidu bear" may be displayed on the edge of a search bar in the search interface as an additional function, just like a Baidu expert sitting beside the user, guiding the user on how to obtain the best search result step by step.

Specifically, the user may choose to start the network robot 10 or choose to close the network robot 10 according to his own needs. When the user chooses to start the network robot 10, if the user inputs a search term in the search bar provided by the search engine 20, then the search engine 20 acquires a plurality of corresponding search results according to the search term, and displays the search results in a search result interface. Meanwhile, the network robot 10 acquires the search term input by the user. For example, as shown in Fig. 2(d), the user inputs "Why is a child's excrement green" in the search bar as the search term, and the "Baidu bear" acquires the search term.

As shown in Fig. 2(e), the "Baidu bear" may generate the corresponding guidance information the Internet says "a child's excrement being green may be caused by dyspepsia or catching a cold. How old is your baby?" to display to the user regarding the search term "Why is a child's excrement green", thereby guiding the user to input corresponding response information regarding the guidance information. Then, for example, the user may input response information "5 years old" regarding the guidance information, and the "Baidu bear" receives the corresponding information input by the user.

The search engine 20 is used for receiving the response information fed back by the network robot 10, and updating search results according to the response information. Specifically, the network robot 10 sends the response information to the search engine 20, and the search engine 20 ranks a plurality of search results again according to the response information, and displays the search results which have been ranked again to the user for checking. For example, the "Baidu bear" sends the response information "5 years old" input by the user to the search engine 20, and the search engine 20 ranks the search results again in combination with the response information "5 years old", and ranks search results which are more in tune with the user's needs at the top to display to the user.

A network robot generates guidance information according to a search term, and guides a user to input response information by means of interaction with the user, such that a search engine ranks search results according to the response information; therefore, the searching system of the embodiments of the present invention can not only help and guide a user to obtain more accurate search results and better satisfy the search needs of the user, but can also provide personalized services for the user and increase interest when the user uses a search engine to carry out a search, thus improving the user experience.

In one embodiment of the present invention, the network robot 10 is specifically used for recording historical search information about the user, acquiring identity information about the user according to the historical search information about the user, and generating guidance information for the user according to the search term and the identity information. The guidance information is provided for the user in the form of questions and answers, and the network robot 10 is further used for collecting information about the user, and establishing a model of the user according to the information about the user. That is to say, the network robot 10 may acquire information such as age, occupation, interests and hobbies of the user according to historical browsing records of the user, and then establishes different user models regarding different types of users according to this information, such that the network robot 10 may generate more targeted dialog content and interact with the user according to the established user model when generating guidance information. For example, as shown in Fig. 2(f), the user inputs "Peking University" in the search bar as the search term, and the "Baidu bear" acquires the search term "Peking University". Specifically, each time the "Baidu bear" records the search term input by the user each time the user uses the search engine 20 to carry out a search. After the "Baidu bear" acquires the search term "Peking University" input by the user, the "Baidu bear" analyzes search terms of historical searches of the user to acquire identity information about the user. For example, the "Baidu bear" analyzes the age of the user by means of the search terms of the user, e.g. the user is a student between 16 and 18 years old, or the user is a child between 6 and 10 years old. Then, as regards the same search term "Peking University", the "Baidu bear" generates different guidance information regarding different ages of users. As shown in Fig. 2(g), if the user is a student between 16 and 18 years old, then the "Baidu bear" may generate the guidance information "Do you want to know about the set up of courses of Peking University?" to display to the user; or as shown in Fig. 2(h), if the user is a child between 6 and 10 years old, then the "Baidu bear" may generate the guidance information "Do you want to know about the history of Peking University?" to display to the user, thereby guiding the user to input corresponding response information regarding the guidance information. Thus, the network robot 10 can gain a deeper understanding of the user by means of acquiring identity information about the user, makes the search results more in tune with user needs, and further improves the user experience.

In one embodiment of the present invention, the network robot 10 is further used for receiving a trigger instruction, and starting a dialog window with the user according to the trigger instruction. Specifically, for example, the user may send a trigger instruction to the "Baidu bear" by clicking same. As shown in Fig. 2(i), after receiving a trigger instruction of the user, the "Baidu bear" starts a dialog and interaction mode with the user, displays guidance information in a dialog window, and performs dialog and interaction with the user by means of the dialog window. As shown in Fig. 2(i), the user may input the response information "I want to know about the admission regulations of Peking University" regarding the guidance information, and the "Baidu bear" receives the response information input by the user. Then, the "Baidu bear" sends the response information "I want to know about the admission regulations of Peking University" input by the user to the search engine 20, and the search engine 20 ranks the search results regarding the search term "Peking University" again in combination with the response information "admission regulations" and ranks search results which are more in tune with the user's needs at the top to display to the user. Thus, the interactivity between the user and the search engine 20 may be further enhanced, and socialization elements are introduced, thereby improving the interest when a user is searching, and further satisfying the search needs of the user.

In order to implement the embodiments above, the present invention also proposes a network robot.

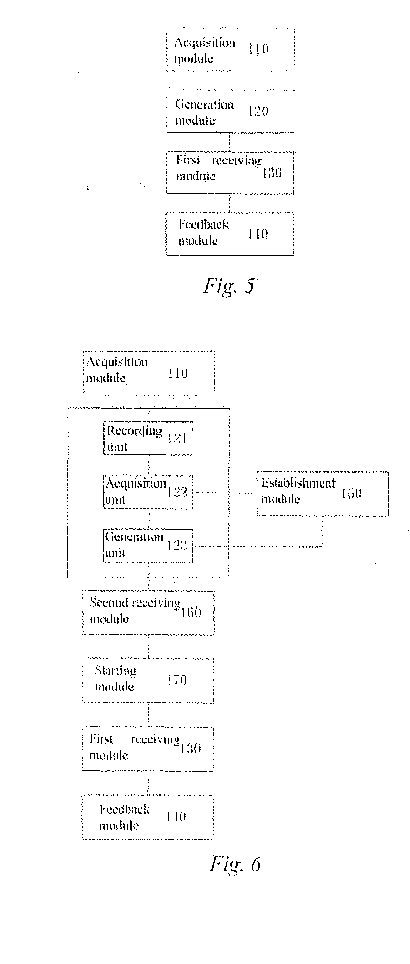

Fig. 5 is a schematic structural diagram of a network robot of one embodiment of the present invention.

As shown in Fig. 5, the network robot comprises: an acquisition module 110, a generation module 120, a first receiving module 130 and a feedback module 140.

Specifically, the acquisition module 110 is used for acquiring a search term from a user. The network robot is an intelligent robot independent of a search engine, and a user may install same on a mobile terminal or a wearable device according to his own needs. When the user does not install the network robot, search results acquired by the user by means of the search engine are passive, and they need to spend time and effort thinking to obtain a more appropriate search term. After the user has installed the network robot, the network robot may help or guide the user to obtain the most appropriate search result. For example, as shown in Fig. 2(a), the network robot is a "Baidu bear", and an installation interface of the "Baidu bear" may be set up on a search interface provided by the search engine. As shown in Fig. 2(b), when the user accesses the search interface, he/she may choose to install the "Baidu bear" by clicking an icon of the "Baidu bear". As shown in Fig. 2(c), after the user has installed the "Baidu bear", the "Baidu bear" may be displayed on the edge of a search bar in the search interface as an additional function, just like a Baidu expert sitting beside the user, guiding the user on how to obtain the best search result step by step. Specifically, the user may choose to start the network robot or choose to close the network robot according to his own needs. When the user chooses to start the network robot, if the user inputs a search term in the search bar provided by the search engine, then the search engine acquires a plurality of corresponding search results according to the search term, and displays the search results in a search result interface. Meanwhile, the acquisition module 110 acquires the search term input by the user. For example, as shown in Fig. 2(d), the user inputs "Why is a child's excrement green" in the search bar as the search term, and the acquisition module 110 acquires the search term.

The generation module 120 is used for generating guidance information for the user according to the search term. For example, as shown in Fig. 2(e), the generation module 120 may generate the corresponding guidance information the Internet says "a child's excrement being green to be caused by dyspepsia or catching a cold. How old is your baby?" to display to the user regarding the search term "Why is a child excrement green", thereby guiding the user to input corresponding response information regarding the guidance information.

The first receiving module 130 is used for receiving response information from the user regarding the guidance information. For example, the user may input response information "5 years old" regarding the guidance information, and the first receiving module 130 receives the corresponding information input by the user.

The feedback module 140 is used for feeding back the response information to a search engine, such that the search engine updates search results. Specifically, the feedback module 140 sends the response information to the search engine, and the search engine ranks a plurality of search results again according to the response information, and displays the search results which have been ranked again to the user for checking. For example, the feedback module 140 sends the response information "5 years old" input by the user to the search engine, and the search engine ranks the search results again in combination with the response information "5 years old", and ranks search results which are more in tune with the user's needs at the top to display to the user.

A network robot generates guidance information according to a search term, and guides a user to input response information by means of interaction with the user, such that a search engine ranks search results according to the response information; therefore, the network robot of the embodiments of the present invention can not only help and guide a user to obtain more accurate search results and better satisfy the search needs of the user, but can also provide personalized services for the user and increase interest when the user uses a search engine to carry out a search, thus improving the user experience.

Fig. 6 is a schematic structural diagram of a network robot of one specific embodiment of the present invention.

As shown in Fig. 6, the network robot comprises: an acquisition module 110, a generation module 120, a first receiving module 130, a feedback module 140, an establishment module 150, a second receiving module 160 and a starting module 170, wherein the generation module 120 specifically comprises a recording unit 121, an acquisition unit 122 and a generation unit 123.

Specifically, the acquisition module 110 is used for acquiring a search term from a user. The network robot is an intelligent robot independent of a search engine, and a user may install same on a mobile terminal or a wearable device according to his own needs. When the user does not install the network robot, search results obtained by the user by means of the search engine are passive, and they need to spend time and effort thinking to obtain a more appropriate search term. After the user has installed the network robot, the network robot may help or guide the user to obtain the most appropriate search result. For example, as shown in Fig. 2(a), the network robot is a "Baidu bear", and an installation interface of the "Baidu bear" may be set up on a search interface provided by the search engine. As shown in Fig. 2(b), when the user accesses the search interface, he/she may choose to install the "Baidu bear" by clicking an icon of the "Baidu bear". As shown in Fig. 2(c), after the user has installed the "Baidu bear", the "Baidu bear" may be displayed on the edge of a search bar in the search interface as an additional function, just like a Baidu expert sitting beside the user, guiding the user on how to obtain the best search result step by step.

Specifically, the user may choose to start the network robot or choose to close the network robot according to his own needs. When the user chooses to start the network robot, if the user inputs a search term in the search bar provided by the search engine, then the search engine acquires a plurality of corresponding search results according to the search term, and displays the search results in a search result interface. Meanwhile, the acquisition module 110 acquires the search term input by the user. For example, as shown in Fig. 2(f), the user inputs "Peking University" in the search bar as the search term, and the acquisition module 110 acquires the search term "Peking University".

The generation module 120 is used for generating guidance information for the user according to the search term. In one embodiment of the present invention, the generation module 120 specifically comprises a recording unit 121, an acquisition unit 122 and a generation unit 123. The recording unit 121 is used for recording historical search information about the user; the acquisition unit 122 is used for acquiring identity information about the user according to the historical search information about the user; and the generation unit 123 is used for generating guidance information for the user according to the search term and the identity information. Specifically, each time the recording unit 121 records the search term input by the user each time the user uses the search engine to carry a out search. After the acquisition module 110 acquires the search term "Peking University" input by the user, the acquisition unit 122 analyzes search terms of historical searches of the user to acquire identity information about the user. For example, the acquisition unit 122 analyzes the age of the user by means of the search terms of the user, e.g. the user is a student between 16 and 18 years old, or the user is a child between 6 and 10 years old. Then, the generation unit 123 may generate different guidance information regarding different identity information about the user. In one embodiment of the present invention, the guidance information is provided for the user in the form of questions and answers. For example, as regards the same search term "Peking University", the generation unit 123 generates different guidance information regarding different ages of users. As shown in Fig. 2(g), if the user is a student between 16 and 18 years old, then the generation unit 123 may generate the guidance information "Do you want to know about the set up of courses of Peking University?" to display to the user; or as shown in Fig. 2(h), if the user is a child between 6 and 10 years old, then the generation unit 123 may generate the guidance information "Do you want to know about the history of Peking University?" to display to the user, thereby guiding the user to input corresponding response information regarding the guidance information. Thus, the network robot can gain a deeper understanding of the user by means of acquiring identity information about the user, makes the search results more in tune with the user's needs, and further improves the user experience.

The establishment module 150 is used for collecting information about the user, and establishing a model of the user according to the information about the user. Specifically, the establishment module 150 may acquire information such as age, occupation, interests and hobbies of the user according to historical browsing records of the user, and then establishes different user models regarding different types of users according to this information, such that the generation module 120 may generate more targeted dialog content and interact with the user according to the established user model when generating guidance information.

The second receiving module 160 is used for receiving a trigger instruction. For example, the user may send a trigger instruction to the second receiving module 160 by clicking the network robot.

The starting module 170 is used for starting a dialog window with the user according to the trigger instruction. For example, as shown in Fig. 2(i), after the second receiving module 160 receives a trigger instruction of the user, the starting module 170 starts a dialog and interaction mode with the user, displays guidance information in a dialog window, and performs dialog and interaction with the user by means of the dialog window.

The first receiving module 130 is used for receiving response information from the user regarding the guidance information. For example, as shown in Fig. 2(i), the user may input the response information "I want to know about the admission regulations of Peking University" regarding the guidance information, and the first receiving module 130 receives the response information input by the user.

The feedback module 140 is used for feeding back the response information to a search engine, such that the search engine updates search results. Specifically, the feedback module 140 sends the response information to the search engine, and the search engine ranks a plurality of search results again according to the response information, and displays the search results which have been ranked again to the user for checking. For example, the feedback module 140 sends the response information "I want to know about the admission regulations of Peking University" input by the user to the search engine, and the search engine ranks the search results regarding the search term "Peking University" again in combination with the response information "admission regulations" and ranks search results which are more in tune with the user's needs at the top to display to the user.

By determining identity information about a user by means of historical search information about the user, and providing different guidance information for users with different identity information, the network robot of the embodiments of the present invention makes the network robot gain a deeper understanding of the user, and makes the ranked search results of the search engine more in tune with the user's needs. In addition, the network robot starts a dialog window with the user according to a trigger instruction, and receives response information from the user regarding the guidance information by means of the dialog window; therefore, the interactivity between the user and the search engine may be enhanced, and socialization elements are introduced, thereby improving the interest when a user is searching, and further satisfying the search needs of the user.

It should be understood that various parts of the present invention may be implemented by means of hardware, software, firmware or a combination thereof. In the embodiments above, a plurality of steps or methods may be implemented by means of software or firmware stored in a memory and executed by an appropriate instruction execution system. For example, if implemented by means of hardware, as in another embodiment, it can be implemented by means of any one or a combination of the following techniques commonly known in the art: a discrete logical circuit having a logical gate circuit used for implementing a logical function for a data signal, an application-specific integrated circuit having an appropriate combinational logical gate circuit, a programmable gate array (PGA), a field programmable gate array (FPGA), etc.

In the present invention, unless explicitly stipulated and defined otherwise, the terms "installation", "connected", "connection", etc. should be understood broadly, for example, it may be a fixed connection, may also be a detachable connection, or may be integrated into a whole; it may be a mechanical connection, and may also be an electrical connection; and it may be a direct connection, or may be an indirect connection by means of an intermediate medium, and may be an internal connectivity of two elements or an interaction relationship of two elements, unless explicitly defined otherwise. For those of ordinary skill in the art, the specific meaning of the terms above in the present invention may be understood according to specific situations.

In the description of the specification, the description to the reference terms such as "one embodiment", "some embodiments", "an example", "a specific example" or "some examples" is intended to mean that a particular feature, structure, material or characteristic described in connection with the embodiment or example is included in at least one embodiment or example of the present invention. In the present specification, the illustrative expression of the above-mentioned terms does not necessarily regard the same embodiment or example. Furthermore, the described particular feature, structure, material or characteristic may be combined in a suitable manner in any one or more embodiments or examples. In addition, in the case of no mutual contradiction, those skilled in the art may incorporate and combine different embodiments or examples described in the present description and features of different embodiments or examples.

Although the embodiments of the present invention have been shown and described above, it should be understood that the embodiments above are exemplary and shall not be understood as limiting the present invention. Those of ordinary skill in the art may make changes, modifications, replacements and variations to the embodiments above within the scope of the present invention.

## Claims

1. A searching method, **characterized by** comprising the steps of:
S 1: acquiring, by a network robot, a search term from a user;
S2: generating, by said network robot, guidance information for said user according to said search term;
S3: receiving, by said network robot, response information from said user regarding said guidance information; and
S4: feeding back, by said network robot, said response information to a search engine, such that said search engine updates search results.

2. The searching method as claimed in claim 1, **characterized in that** said step S2 specifically comprises:
S21: recording, by said network robot, historical search information about said user;
S22: acquiring, by said network robot, identity information about said user according to the historical search information about said user; and
S23: generating, by said network robot, guidance information for said user according to said search term and said identity information.

3. The searching method as claimed in claim 1 or 2, **characterized in that** said guidance information is provided for said user in the form of questions and answers.

4. The searching method as claimed in claim 1, **characterized by**, prior to said step S3, further comprising:
S24: receiving, by said network robot, a trigger instruction; and
S25: starting, by said network robot, a dialog window with said user according to said trigger instruction.

5. The searching method as claimed in claim 1, **characterized in that** said network robot collects information about said user, and establishes a personal model of said user according to the information about said user.

6. A searching system, **characterized by** comprising: a network robot and a search engine, wherein,
said network robot is used for acquiring a search term from a user, generating guidance information for said user according to said search term, receiving response information from said user regarding said guidance information, and feeding back said response information to the search engine; and
said search engine is used for receiving said response information fed back by said network robot, and updating search results according to said response information.

7. The searching system as claimed in claim 6, **characterized in that** said network robot is specifically used for recording historical search information about said user, acquiring identity information about said user according to the historical search information about said user, and generating guidance information for said user according to said search term and said identity information.

8. The searching system as claimed in claim 6 or 7, **characterized in that** said guidance information is provided for said user in the form of questions and answers.

9. The searching system as claimed in claim 6, **characterized in that** said network robot is further used for receiving a trigger instruction, and starting a dialog window with said user according to said trigger instruction.

10. The searching system as claimed in claim 6, **characterized in that** said network robot is further used for collecting information about said user, and establishing a model of said user according to the information about said user.

11. A network robot, **characterized by** comprising:
an acquisition module for acquiring a search term from a user;
a generation module for generating guidance information for said user according to said search term;
a first receiving module for receiving response information from said user regarding said guidance information; and
a feedback module for feeding back said response information to a search engine, such that said search engine updates search results.

12. The network robot as claimed in claim 1, **characterized in that** said generation module specifically comprises:
a recording unit for recording historical search information about said user;
an acquisition unit for acquiring identity information about said user according to the historical search information about said user; and
a generation unit for generating guidance information for said user according to said search term and said identity information.

13. The network robot as claimed in claim 11 or 12, **characterized in that** said guidance information is provided for said user in the form of questions and answers.

14. The network robot as claimed in claim 11, **characterized by** further comprising:
a second receiving module for receiving a trigger instruction; and
a starting module for starting a dialog window with said user according to said trigger instruction.

15. The network robot as claimed in claim 11, **characterized by** further comprising:
an establishment module for collecting information about said user, and establishing a model of said user according to the information about said user.
